# EUROPÄISCHE PATENTSCHRIFT

(11) **EP 0 943 828 B1**
(45) Veröffentlichungstag und Bekanntmachung des Hinweises auf die Patenterteilung: **09.11.2005**
(21) Anmeldenummer: 99103584.1
(22) Anmeldetag: 24.02.1999
(51) Int. Cl.: F16D 13/64

(54) **Verfahren zum Herstellen der Keilnutverzahnung in einer Kupplungsscheiben-Nabe**
Method for making splines in the hub of a clutch disc
Procédé de réalisation de cannelures dans le moyeu d'un disque d'embrayage

(30) Priorität: 17.03.1998 DE 19811614
(43) Veröffentlichungstag der Anmeldung: 22.09.1999
(73) Patentinhaber: Bayerische Motoren Werke Aktiengesellschaft, 80788 München (DE)
(72) Erfinder: Wagner, Norbert, 80339 München (DE); Esser, Peter-Josef, 82229 Seefeld (DE); Rastinger, Bernhard, 81249 München (DE)

(56) Entgegenhaltungen:
- EP-A- 0 040 505

## Beschreibung

Die Erfindung betrifft ein Verfahren zum Herstellen der Keilnutverzahnung in der Nabe der Mitnehmerscheibe einer Kupplung durch Räumen.

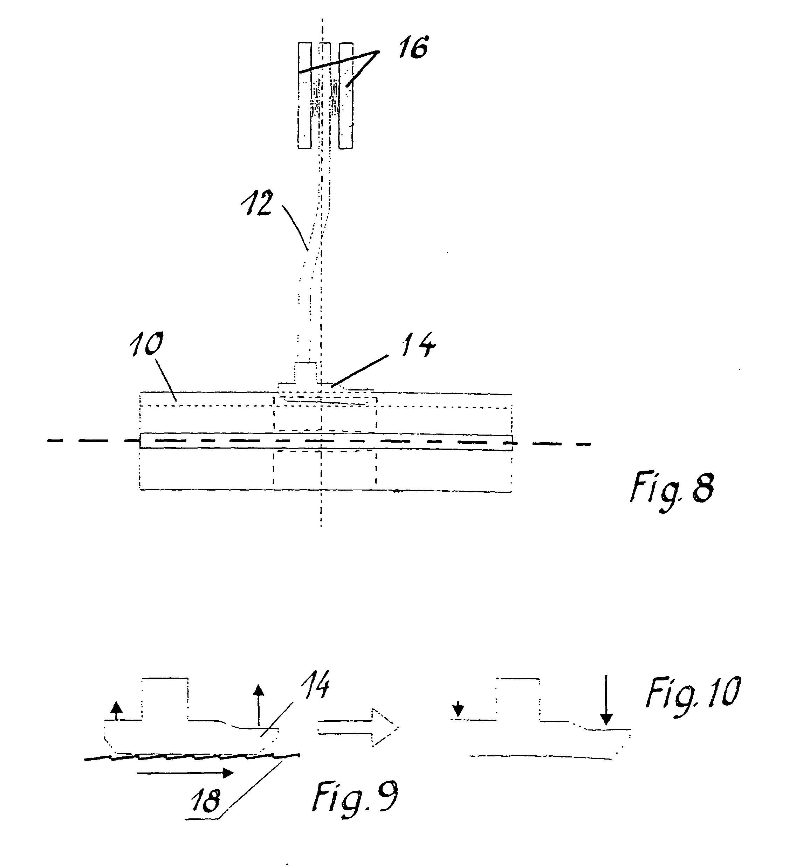

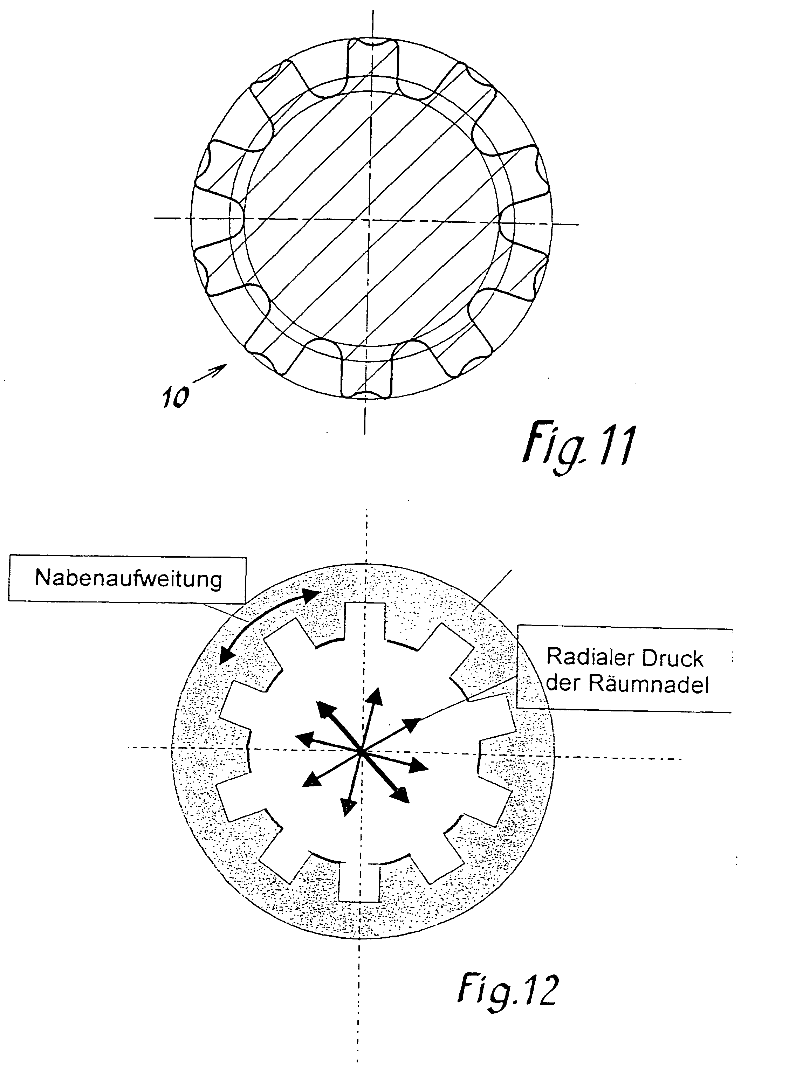

Die Mitnehmerscheibe einer Kupplung ist auf der Eingangswelle eines Getriebes verdrehfest und verschiebbar gelagert. Zu diesem Zweck sind die Eingangswelle des Getriebes und die Nabe der Mitnehmerscheibe mit einem sogenannten Keilwellenprofil versehen. In Fig. 8 der beiliegenden Zeichnungen sind eine Eingangswelle 10 eines Getriebes und eine Mitnehmerscheibe 12 der zugehörigen Kupplung schematisch im Längsschnitt dargestellt. Die Mitnehmerscheibe 12 ist an einer Nabe 14 befestigt und im äußeren Umfangsbereich mit Reibbelägen 16 versehen. Das Keilnutprofil der Eingangswelle 10 und der Nabe 14 ist aus den Querschnitten nach Fig. 11 bzw. 12 ersichtlich. Die bekannte Mitnehmerscheibe 12 ist im mittleren Bereich der Nabe 14 befestigt, wo diese eine größere Wandstärke hat als an den beiden Endbereichen. Bei der Herstellung wird die Nabe 14 mit einer axialen Bohrung versehen. Durch diese Bohrung wird eine Räumnadel 18 hindurchgezogen, um die Keilnutverzahnung zu erzeugen. Die Erzeugung einer Keilnutverzahnung mittels einer Räumnadel ist in der EP 0 040 505 beschrieben.

Bei diesem Vorgang, der als Räumen bezeichnet wird, übt die Räumnadel auf die Nabe 12 starke radiale Kräfte aus. Diese radialen Kräfte sind bestrebt, die Nabe elastisch aufzuweiten. Wegen der unterschiedlichen Wandstärke der Nabe ist diese an den beiden Endbereichen erheblich elastischer als im mittleren Bereich. Beim Räumen kommt es daher im wesentlichen nur an den beiden Endbereichen zu einer elastischen Verformung. Diese elastische Verformung der Nabe 14 ist in Fig. 9 durch radiale Pfeile angedeutet. Während die Räumnadel 18 in Pfeilrichtung durch die Nabe 14 hindurchgezogen wird, wird Material vom Innenumfang der Nabe abgetragen, so dass eine Keilnutverzahnung entsteht. Wenn der Räumvorgang abgeschlossen und die Räumnadel 18 aus der Nabe 14 herausgezogen ist, dann entfällt die radiale Belastung der Nabe, und deren elastisch verformte Endbereiche bewegen sich unter Entspannung nach innen. Die Keilbahnen werden daher wie aus Fig. 10 ersichtlich konisch. Der Umstand, dass die beiden Endbereiche der Nabe 14 beim Räumen zunächst elastisch aufgeweitet wurden und sich nach dem Räumen unter der Eigenelastizität zusammenziehen, hat aber auch zur Folge, dass die Keilnuten über die Länge der Nabe keine einheitliche Breite haben, sondern sie verjüngen sich vom mittleren Bereich zu den beiden Endbereichen hin. Solche konisch zulaufende Keilbahnen wirken sich aber im Betrieb nachteilig aus. Das Spiel zwischen der Nabe 14 und dem Profil der Eingangswelle 10 des Getriebes muß in engen Grenzen gehalten werden, um eine einwandfreie Funktion von Kupplung und Getriebe zu gewährleisten. Einerseits kann ein zu kleines Spiel die Verschiebbarkeit der Nabe 14 auf der Eingangswelle 10 behindern, was zu einem schlechten Trennverhalten der Kupplung und damit zu einer Verschlechterung der Schaltbarkeit des Getriebes führt, die unter Umständen Getriebeschäden zur Folge haben kann. Andererseits erzeugt ein großes Spiel Geräusche (Klackern und Schlagen) bei einem Lastwechsel.

Für eine einwandfreie Funktion von Kupplung und Getriebe wäre es daher wesentlich vorteilhafter, wenn die Keilbahnen der Nabe 14 von den beiden Endbereichen zum mittleren Bereich hin konisch bzw. bikonkav verlaufen würden.

Der Erfindung liegt die Aufgabe zugrunde, das gattungsgemäße Verfahren dahingehend weiterzubilden, dass Keilbahnen gebildet werden, die von den Endbereichen der Nabe zum mittleren Bereich hin konisch zulaufen.

Erfindungsgemäß wird diese Aufgabe dadurch gelöst, dass während dem Räumen eine radiale Aufweitung der Nabe durch eine Räumnadel im axial mittleren Bereich ermöglicht, in den beiden Endbereichen jedoch verhindert wird.

Nach Beendigung des Räumvorgangs kann sich der mittlere Bereich der Nabe unter Verringerung des Durchmessers entspannen. Der Innendurchmesser der Nabe und die Breite der Keilbahnen nimmt daher von den beiden Endbereichen zum mittleren Bereich hin ab. Es werden also zum mittleren Bereich hin konisch zulaufende Keilbahnen erhalten. Diese besondere Ausbildung der Keilbahnen ermöglicht ein großes Kippspiel der Mitnehmerscheibe bei kleinem Verdrehspiel. Dies gewährleistet einerseits eine einwandfreie Funktion der Kupplung, weil ein Verklemmen verhindert wird, und andererseits werden Lastwechsel-Geräusche vermieden.

Der erfinderische Grundgedanke kann auf unterschiedlich Weise verwirklicht werden. Die angestrebte Aufweitung ausschließlich im mittleren Bereich der Nabe kann beispielsweise dadurch erreicht werden, daß die Nabe an den beiden Endbereichen steif und im mittleren Bereich elastisch ausgebildet wird.

Eine andere Möglichkeit, das erfindungsgemäße Verfahren zu verwirklichen besteht darin, daß die Nabe vor dem Räumen an den beiden Endbereichen radial eingespannt wird. Eine Weiterbildung dieses Verfahrens besteht darin, daß die Nabe unter Verringerung ihres Innendurchmessers elastisch vorverformt wird. Durch diese Maßnahme kann die Konizität der Keilbahnen von den beiden Endbereichen zum mittleren Bereich der Nabe noch verstärkt werden.

Im übrigen ist es auch möglich, die vorstehenden Varianten derart miteinander zu kombinieren, daß nur ein Endbereich der Nabe steif ausgebildet ist und der andere Endbereich radial eingespannt wird.

Es ist als Stand der Technik anzusehen, daß durch Variation der Bearbeitungszeit und/oder der Schneidengeometrie des Räumwerkzeugs (z. B. gerader oder spiralförmiger Schnitt) auch die Innenkontur variiert werden kann. Vorteilhaft ist es aber, den Stand der Technik mit o. g. Herstellverfahren zu verbinden, um die gewünschte Idealgeometrie zu erreichen.

Einige Ausführungsformen der Erfindung sind in der Zeichnung dargestellt und werden nachfolgend näher erläutert. Es zeigt:
Fig. 1 einen schematischen Längsschnitt durch die Eingangswelle eines Getriebes und die Mitnehmerscheibe der Kupplung.
Fig. 2 einen schematischen Längsschnitt durch die Nabe der Mitnehmerscheibe während des Räumvorgangs,
Fig. 3 eine Darstellung ähnlich wie Fig. 3 nach Beendigung des Räumvorgangs,
Fig. 4 einen schematischen Längsschnitt durch eine abgewandelte Ausführungsform einer Nabe während des Räumvorgangs,
Fig. 5 einen schematischen Längsschnitt durch ein Nabe nach Fig. 3 nach dem Raumvorgang,
Fig. 6 einen schematischen Längsschnitt durch noch eine andere Ausführungsform einer Nabe während des Räumvorgangs,
Fig. 7 einen schematischen Längsschnitt durch die Nabe nach Fig. 6 nach dem Räumvorgang,
Fig. 8 einen schematischen Längsschnitt durch eine Eingangswelle eines Getriebes und eine herkömmliche Mitnehmerscheibe der Kupplung,
Fig. 9 einen schematischen Längsschnitt durch die Nabe der Mitnehmerscheibe nach Fig. 8 während des Räumvorgangs,
Fig. 10 einen schematischen Längsschnitt durch die Nabe nach Fig. 9 nach dem Räumvorgang,
Fig. 11 einen Querschnitt durch die Eingangswelle des Getriebes, und
Fig. 12 einen Querschnitt durch die Nabe der Mitnehmerscheibe.

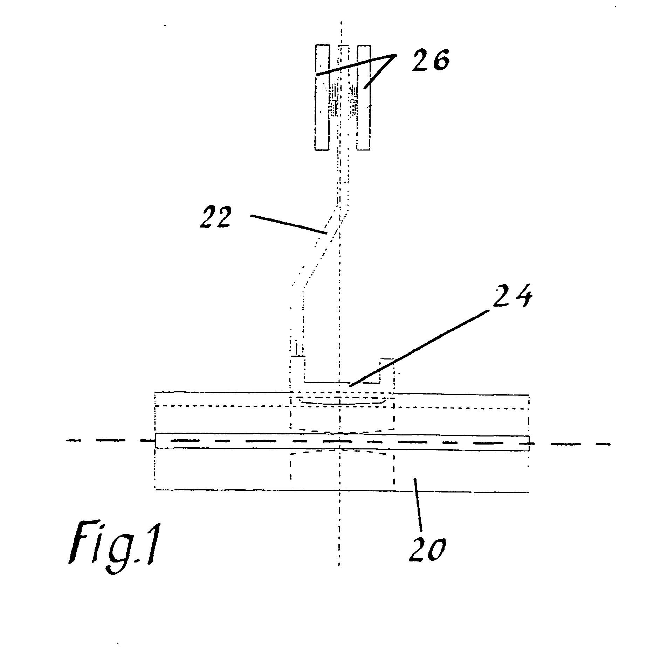

Fig. 1 zeigt die Eingangswelle 20 eines Getriebes, auf der die Mitnehmerscheibe 22 einer Kupplung in bekannter Weise mittels einer Keilnutverzahnung drehfest, aber verschiebbar gelagert ist. Die Nabe 24 der Mitnehmerscheibe hat ein U-förmiges Profil, so daß sie an den Endbereichen steif, im mittleren Bereich jedoch elastisch ist. Die Mitnehmerscheibe 22 ist mit einem der endseitigen Flansche der Nabe 24 verbunden, um die Elastizität des mittleren Bereichs der Nabe nicht zu beeinträchtigen. Die Mitnehmerscheibe 22 ist gekröpft, so daß ihr die Reibbeläge 26 tragender äußerer Umfangsbereich zur Nabe 24 mittig angeordnet ist.

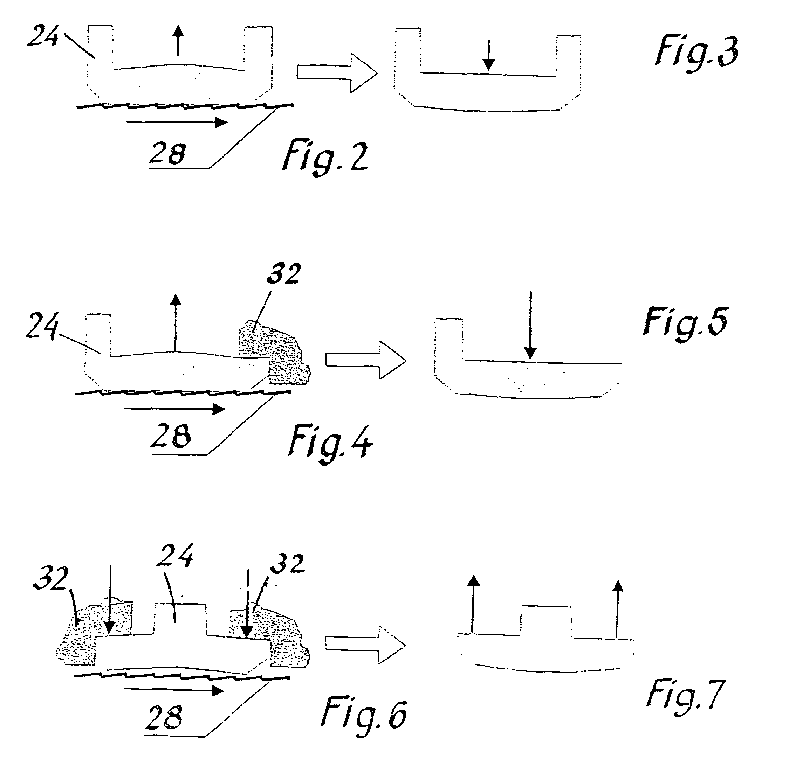

Wenn zur Erzeugung der Keilnutverzahnung eine Räumnadel 28 durch den Nabenrohling hindurchgezogen wird, wie dies in Fig. 2 veranschaulicht ist, dann übt die Räumnadel starke radiale Kräfte auf die Nabe aus. Wegen der besonderen Querschnittsform der Nabe 24 kann diese im mittleren Bereich radial aufgeweitet werden, an den beiden Endbereichen jedoch nicht. Diese elastische Verformung der Nabe 24 hat zur Folge, daß an den beiden Endbereichen mehr Material abgetragen wird, als im mittleren Bereich. Nach Beendigung des Räumvorgangs kann sich die Nabe entspannen und ihr mittlerer Bereich federt radial nach innen zurück, wie dies in Fig. 3 gezeigt ist. Im entspannten Zustand der Nabe wird deren innere Kontur ballig, und die mit der Räumnadel 28 erzeugten Keilbahnen verjüngen sich von den beiden Endbereichen zum mittleren Bereich hin. Die Nabe 24 hat daher im mittleren Bereich gegenüber der Eingangswelle 20 ein geringes Verdrehspiel; die sich zu den Randbereichen hin konisch erweiternden Keilbahnen ermöglichen aber eine großes Kippspiel der Nabe 24 und der mit dieser verbundenen Mitnehmerscheibe 22. Dadurch werden einerseits Lastwechsel-Geräusche vermieden und andererseits wird ein Verklemmen der Mitnehmerscheibe verhindert und damit eine einwandfreie Funktion der Kupplung erzielt.

Die in Fig. 4 gezeigte abgewandelte Ausführungsform einer Nabe 30 hat einen L-förmigen Querschnitt, so daß nur ein Endbereich steif ist, während der andere Endbereich ebenso wie der mittlere Bereich elastisch ist. Damit sich beim Räumvorgang nur der mittlere Bereich der Nabe 30 unter dem radialen Druck aufweiten kann, wird der elastische Endbereich der Nabe mit einem Spannwerkzeug 32 radial eingespannt. Nach dem Räumen hat die Nabe 30 die gleiche Kontur wie die vorstehend beschriebene erste Ausführungsform, und die Keilnuten verjüngen sich von den beiden Endbereichen der Nabe 30 zu deren mittlerem Bereich hin.

Bei der in Fig. 6 gezeigten dritten Ausführungsform ist die Nabe 40 über ihre gesamte Länge in radialer Richtung elastisch ausgebildet. Den beiden Endbereichen der Nabe 40 ist jeweils ein Spannwerkzeug 33 zugeordnet, und die Nabe wird mit den Spannwerkzeugen vor dem Einführen der Räumnadel 28 unter Verringerung ihres Innendurchmessers elastisch verformt. Infolge dieser Vorspannung der Nabe 40 wird von deren Endbereichen beim Räumvorgang mehr Material abgetragen als in ihrem mittleren Bereich. Nach Beseitigung der beiden Spannwerkzeuge 32 können sich die beiden Randbereiche der Nabe 40 radial nach außen entspannen. Es wird daher ebenfalls eine ballige Nabenkontur erhalten, und die Keilnuten verjüngen sich von den beiden Randbereichen der Nabe 40 zu deren mittlerem Bereich hin. Es wird also das gleiche Ergebnis wie bei der ersten und zweiten Ausführungsform erzielt.

### Bezugszeichenliste:

- 10: Eingangswelle
- 12: Mitnehmerscheibe
- 14: Nabe
- 16: Reibbeläge
- 18: Räumnadel
- 20: Eingangswelle
- 22: Mitnehmerscheibe
- 24: Nabe
- 26: Reibbeläge
- 28: Räumnadel
- 30: Nabe
- 32: Spannwerkzeug
- 34: Nabe

## Patentansprüche

1. Verfahren zum Herstellen der Keilnutverzahnung in der Nabe (24) der Mitnehmerscheibe (22) einer Kupplung durch Räumen, **dadurch gekennzeichnet, dass** während dem Räumen eine radiale Aufweitung der Nabe (24) durch eine Räumnadel (18) im axial mittleren Bereich ermöglicht, in den beiden Endbereichen jedoch verhindert wird.

2. Verfahren nach Anspruch 1, **dadurch gekennzeichnet, dass** die Nabe (24) an den beiden Endbereichen steif und im axial mittleren Bereich elastisch ausgebildet wird.

3. Verfahren nach Anspruch 1, **dadurch gekennzeichnet, dass** die Nabe (24) vor dem Räumen an den beiden Endbereichen radial eingespannt wird.

4. Verfahren nach Anspruch 3, **dadurch gekennzeichnet, dass** die Nabe (24) unter Verringerung ihres Innendurchmessers elastisch vorverformt wird.

## Claims

1. A method of producing splines in the hub (24) of the driving disc (22) of a clutch by broaching, **characterised in that** during the broaching process the hub (24) can be radially expanded by a broach (18) in the axially central region but not in the two end regions.

2. A method according to claim 1, **characterised in that** the hub (24) is formed rigid at the two end regions and elastic in the axially central region.

3. A method according to claim 1, **characterised in that** before being broached, the hub (24) is radially clamped at both end regions.

4. A method according to claim 3, **characterised in that** the hub (24) is elastically preformed so as to reduce its inner diameter.

## Revendications

1. Procédé pour produire une cannelure dans le moyeu (24) d'un disque entraîneur (22) d'un embrayage par brochage,
**caractérisé en ce que**
pendant le brochage, on laisse se produire un élargissement radial du moyeu (24) sous l'action d'un outil-broche (18) dans la région centrale selon la direction axiale tandis qu'on l'empêche dans les deux régions terminales.

2. Procédé selon la revendication 1,
**caractérisé en ce que**
le moyeu (24) est rigide dans les deux régions terminales et élastique dans la région centrale selon la direction axiale.

3. Procédé selon la revendication 1,
**caractérisé en ce que**
avant le brochage, on bride le moyeu (24) dans la direction radiale dans les deux régions terminales.

4. Procédé selon la revendication 3,
**caractérisé en ce qu'**
on soumet le moyeu (24) à une prédéformation élastique comportant une diminution de son diamètre intérieur.
